# EUROPÄISCHE PATENTSCHRIFT

(11) **EP 1 167 937 B1**
(45) Veröffentlichungstag und Bekanntmachung des Hinweises auf die Patenterteilung: **11.06.2003**
(21) Anmeldenummer: 01113891.4
(22) Anmeldetag: 08.06.2001
(51) Int. Cl.: G01L 5/22, G06K 11/18

(54) **Eingabegerät für Bewegungsmuster ( und Töne ) durch Auslenkungen und deren Geschwindigkeiten ( optisch )**
Input device for movement patterns ( and tones ) by input deflections and their velocities ( optical )
Dispositif d'entrée pour des types de mouvements figurés ( et son ) par des déviations et leur vitesse ( optique )

(30) Priorität: 19.06.2000 DE 10029173
(43) Veröffentlichungstag der Anmeldung: 02.01.2002
(73) Patentinhaber: Deutsches Zentrum für Luft- und Raumfahrt e.V., 53175 Bonn (DE)
(72) Erfinder: Gombert, Bernd, 82284 Grafrath (DE); Dietrich, Johannes, 82205 Gilching (DE); Senft, Volker, 82229 Seefeld (DE)
(74) Vertreter: von Kirschbaum, Albrecht, Dipl.-Ing.

(56) Entgegenhaltungen:
- WO-A-00/14676
- DE-A- 19 937 307
- US-A- 5 757 360

## Beschreibung

Die Erfindung betrifft ein durch Handbewegungen betätigbares Eingabegerät zum Kommandieren von maschinen- und/oder rechnergestützten Steuerungsoperationen für kinematische Bewegungen eines realen oder virtuellen mehrteiligen Objekts mit Kraft-Momenten-Sensor, mit dem Linearverschiebungen in Form translatorischer Bewegungen in Richtung der drei aufeinander senkrecht stehenden Achsen eines räumlichen, rechtwinkligen Koordinatensystems und/oder Drehauslenkungen in Form rotatorischer Bewegungen um diese drei Achsen erfaßt und in kommandierte Bewegungen des zu steuernden Objekts umgesetzt werden.

Außerdem betrifft die Erfindung Verwendungsmöglichkeiten des Eingabegeräts.

Derartige Kraft-Momenten-Sensoren sind beispielsweise aus DE 199 37 307 A1, DE 36 11 336 C2 und EP 0 240 023 B1 bekannt. Mit Hilfe eines solchen, in einem Eingabegerät untergebrachten Kraft-Momenten-Sensors lassen sich Linearverschiebungen und/oder Drehauslenkungen und zwar drei translatorische Bewegungen in Richtung der drei aufeinander senkrecht stehenden Achsen (X, Y, Z) eines räumlich rechtwinkligen Koordinatensystems und drei rotatorische Bewegungen um diese drei Achsen erfassen und direkt in translatorische und rotatorische Bewegungen bzw. Geschwindigkeiten eines zu steuernden Gesamtobjekts umsetzen. So können beispielsweise Automaten, Roboter, Manipulatoren oder ähnliche Systeme sowie auch 3D-Computergraphiken gesteuert werden.

Moderne Rechner sind immer mehr dazu in der Lage, komplexe 3D-Bewegungssteuerungen in Echtzeit auszuführen. Die Manipulation dieser Bewegungen und damit möglicherweise verbundener Klangveränderungen sind daher entsprechend dem menschlichen Empfinden und Erleben zu steuern.

In diesem Zusammenhang ist aus US 57 57 360 A ein von Hand betätigtes Eingabegerät zur Steuerung eines virtuellen Objekts auf einem Rechner-Bildschirm bekannt. Hierbei kann das Objekt selbst entsprechend der Bewegung des eiförmigen und von einer Hand umfaßten Eingabegeräts bewegt werden, oder es können vereinbarte Bewegungsmuster des Eingabegeräts auf Teile des virtuellen Objekts wirken. Das eingesetzte Eingabegerät beruht auf dem Prinzip eines Beschleunigungsmessers, der aus in vorher festgelegten Mustern ausgeführten Bewegungen des gesamten, in einer Hand eingelegten Eingabegeräts auf erkennbare Beschleunigungen und Beschleunigungsmuster schließt, die detektiert werden, um dem auf dem Bildschirm dargestellten Objekt eine der jeweiligen Beschleunigung bzw. dem jeweiligen Beschleunigungsmuster zugewiesene Bewegungscharakteristik zukommen zu lassen. Bei diesem bekannten Eingäbegerät, das nur für die Steuerung oder Animation virtueller Objekte, aber nicht für die Steuerung oder Animation realer Objekte, also z.B. von Robotern und Figuren, vorgesehen ist, ergeben sich jedoch besonders dann, wenn eine Vielzahl von unterschiedlichen Animationsvarianten des Objekts bewerkstelligt werden soll, Schwierigkeiten bei der korrekten gezielten Ausführung der einem einzelnen gewünschten Beschleunigungsmuster zugeordneten Handbewegung, da wegen der Bewegung des eiförmigen Eingabegeräts im freien Raum keine feste Bezugsbasis für eine genaue Führung vorhanden ist und nur Beschleunigungsreaktionen ausgewertet werden. Eine hohe Animationsvielfalt des virtuellen Objekts kann somit mit diesem bekannten Eingabegerät wegen der geringen Zielsicherheit nicht erreicht werden, so daß es dann auch an Realitätsnähe und Natürlichkeit der Animation mangelt.

Der Erfindung liegt die Aufgabe zu Grunde, ein Eingabegerät der eingangs genannten Art so weiterzubilden, daß kinematische Steuerungs- und Animationsoperationen von Objekten gezielt und intuitiv ausgeführt werden können. Bei den zu steuernden bzw. zu animierenden Objekten soll es sich dabei vor allem um menschenähnliche Roboter oder um vom Rechner erzeugte virtuelle Lebewesen handeln, wobei eine hohe Steuerungs- bzw. Animationsvielfalt bei großer Zielsicherheit der jeweils gewünschten Steuerungs- bzw. Animationsvariante erreicht werden soll.

Gemäß der Erfindung, die sich auf ein Eingabegerät der eingangs genannten Art bezieht, wird die gestellte Aufgabe dadurch gelöst, daß die kommandierten einzelnen Linearverschiebungen und/oder Drehauslenkungen des Kraft-Momenten-Sensors in transformierender Weise bestimmten kinematischen Bewegungsmustern von Teilen des infolgedessen gezielt manipulierbaren bzw. animierbaren realen oder virtuellen Objekts als Verkopplung zugeordnet sind und daß die kommandierten Geschwindigkeiten der betreffenden Linearverschiebungen und/oder Drehauslenkungen des Kraft-Momenten-Sensors zusätzlich als kinematische Verkopplungszuordnung wertbar sind. Die Einzelbewegungen der zu steuernden Kinematik werden dabei so transformiert, wie man es in ähnlicher Weise von einem Puppenspieler her kennt, der eine Marionette manipuliert.

Vorteilhafte Verwendungsmöglichkeiten des Eingabegeräts nach der Erfindung bestehen bei maschinen- oder rechnergesteuerten Objekten, die in sich beweglichen und/oder auch insgesamt beweglichen Gegenständen oder Lebewesen nachgebildet sind, wobei Teile des jeweils nachgebildeten Gegenstandes oder Lebewesens, z.B. die Arme, die Beine, der Rumpf und der Kopf eines Lebewesens, die hinsichtlich ihrer Kinematik zu steuernden Teile des Objekts bilden. Es ist auch eine Verwendung für rechnergesteuerte Animationsoperationen der Objekte zweckmäßig.

Da durch das Eingabegerät nach der Erfindung bis zu sechs Freiheitsgrade gleichzeitig gesteuert werden können, werden Bewegungen und Animationen von maschinen- und oder rechnergesteuerten nachgebildeten Lebewesen oder Gegenständen sehr realitätsnah und natürlich wiedergegeben.

Da es bei sechs Freiheitsgraden zwölf Bewegungshauptrichtungen gibt, denen sich jeweils eine Verkopplungszuordnung zuteilen läßt, kann man diese Bewegungshauptrichtungen in vorteilhafter Weise mit Geschwindigkeits- und/oder Positionsstufen zusätzlich untergliedern, so daß bei zwei Geschwindigkeits- und/oder Positionsstufen bereits 24 kinematische Zuordnungen möglich wären. Bei drei Geschwindigkeits- und/oder Positionsstufen sind es 36 kinematische Zuordnungen, usw.

Das Eingabegerät nach der Erfindung ist nicht nur für die Bewegungssteuerung von Objektteilen allein einsetzbar. Vielmehr können in vorteilhafter Weise zusätzlich zur Bewegungssteuerung von Objektteilen Töne und/oder Musik jeglicher Art kombiniert und/oder variiert werden. Dies würde beispielsweise bedeuten, daß bei Steuerung einer höheren Geschwindigkeit des Eingabegerätes von seiten der bedienenden Person Töne, z.B.

Schrittgeräusche, oder Musiksequenzen erklingen und/oder sich verändern. Somit lassen sich Reibungsklänge oder auch dramatische Musiksequenzen mit der Bewegungssteuerung kombinieren und tragen eindrucksvoll zu der Realitätsnähe und Natürlichkeit bei.

Die Realisierungsform eines besonders vorteilhaften Eingabegerätes mit Kraft-Momenten-Sensor ist im Patentanspruch 5 und den auf diesen Anspruch unmittelbar oder mittelbar rückbezogenen Ansprüchen 6 bis 9 angegeben. Derartige oder ähnliche Kraft-Momenten-Sensoren sind beispielsweise aus DE 199 37 307 A1, DE 36 11 336 C2 oder EP 0 240 023 B1 bekannt. Mit Hilfe eines solchen in einem Eingabegerät untergebrachten Kraft-Momenten-Sensors können Linearverschiebungen oder Drehauslenkungen, wie sie z.B. von einer menschlichen Hand in Form von Kräften und Momenten erzeugt werden können, erfaßt und direkt in translatorische und rotatorische Bewegungen bzw. Geschwindigkeiten eines zu steuernden Objekts umgesetzt werden.

Da es sich bei der Erfindung mittels des Kraft-Momenten-Sensors z.B. der vorstehenden Art um ein analoges senso-haptisches Eingabegerät handelt, kann die Kombination hinsichtlich z.B. einer 8 Bit-Sensorauflösung von 512 (± 256) Geschwindigkeitsstufen und 512 (± 256) Ton-/Geräuschveränderungen mit der Bewegungssteuerung eine sehr große Vielzahl von Kombinationen zulassen.

Die Erfindung wird im folgenden anhand von Zeichnungen erläutert. Es zeigen:
- Fig.1: in einer Schrägansicht die sechs möglichen Bewegungskomponenten eines beim Eingabegeräts nach der Erfindung verwendeten Kraft-Momenten-Sensors,
- Fig.2 bis Fig.20: schematische Darstellungen zur Verdeutlichung verschiedener Zuordnungen zwischen Bewegungen eines Kraft-Momenten-Sensors und Bewegungen einer Menschennachbildung,
- Fig.21: eine schematische Darstellung eines einen optoelektronischen Kraft-Momenten-Sensor enthaltenden Eingabegerätes mit teilweise aufgeschnittener Bedienkappe, und
- Fig.22: eine im Eingabegerät von Fig.21 untergebrachte opto-elektronische Anordnung.

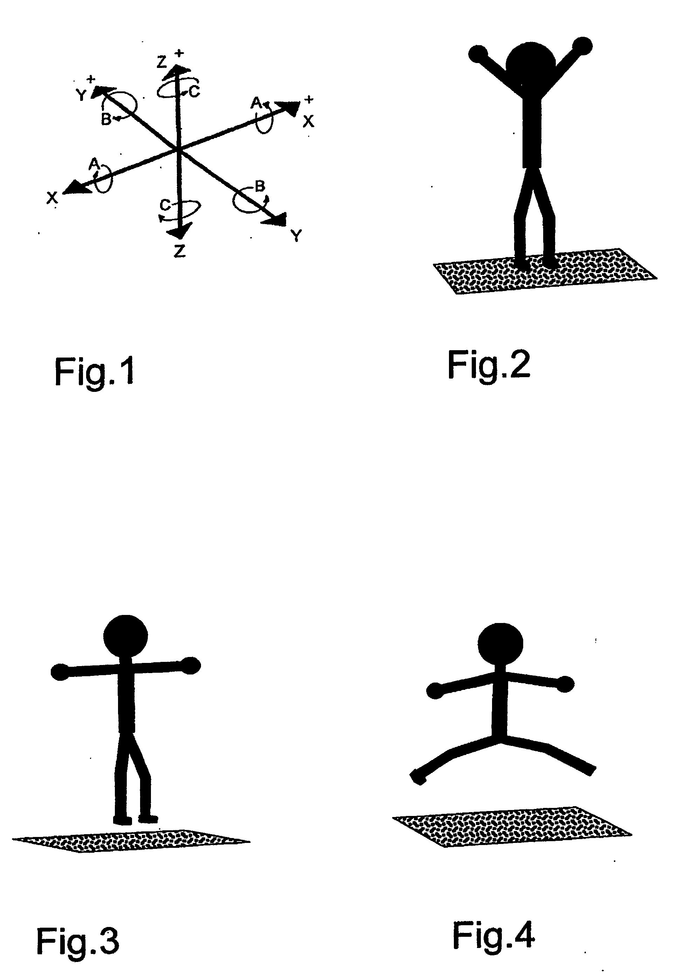

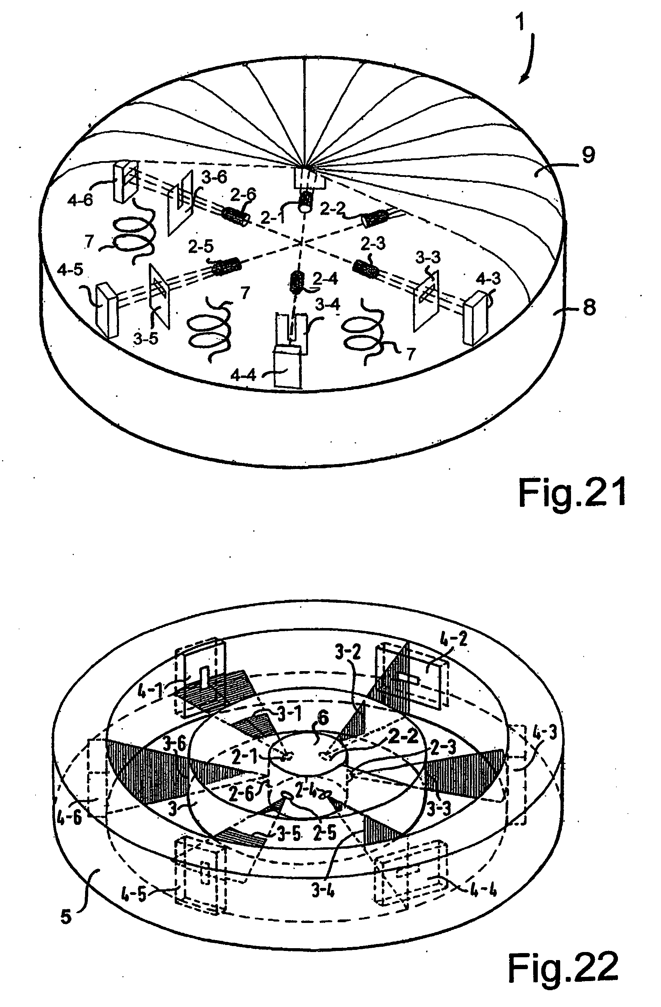

In Fig.1 sind die sechs möglichen Bewegungskomponenten wiedergegeben, die mit einem Eingabegerät erfaßt werden sollen. Das in Fig.21 und Fig.22 beispielhaft dargestellte Eingabegerät mit Kraft-Momenten-Sensor ist zur Wahrnehmung dieser Bewegungsrichtungen in der Lage und erfaßt sämtliche Linearverschiebungen und Drehauslenkungen, wie sie von einer menschlichen Hand in Form von Kräften und Momenten erzeugt werden können, um die Steuerung eines Objekts und/oder von Teilen eines Objekts durchzuführen. Die möglichen Linearverschiebungen verlaufen in beiden Richtungen der drei deswegen mit jeweils zwei Pfeilspitzen versehenen Koordinatenachsen X, Y und Z eines rechtwinkligen räumlichen Koordinatensystems, während die Drehauslenkungen, d.h. die um die jeweiligen Koordinatenachsen X, Y und Z erzeugten Momenten-Vektoren A, B und C, durch mit Pfeilspitzen versehene Teilkreise angedeutet sind. Die mit dem Eingabegerät, z.B. demjenigen nach Fig.21 und Fig.22 gemessenen Kräfte und Momente werden direkt in translatorische und rotatorische Bewegungen bzw. Geschwindigkeiten der einzelnen maschinen- oder rechnergesteuerten Objektteile umgesetzt.

Anhand der schematischen, piktogrammartigen Darstellungen in Fig.2 bis Fig.20 werden verschiedene denkbare Zuordnungen zwischen Bewegungen eines Kraft-Momenten-Sensors und Bewegungen einer Menschennachbildung verdeutlicht und unter Einbeziehung der in Fig.1 gezeigten Richtungen erläutert. Als Kraft-Momenten-Sensor läßt sich insbesondere ein solcher verwenden, wie er im Eingabegerät von Fig.21 und 22 abgebildet und anhand dieser beiden Figuren auch beschrieben ist.

Ein langsames Hochziehen der griffartigen Bedienkappe (8 in Fig.21) aus ihrer Ausgangsstellung, d.h. eine langsame Bewegung in positiver Z-Richtung, führt zu einer Bewegung der Arme (= Objektteile) nach oben und zurück nach unten, wie es in der piktogrammartigen Darstellung eines menschlichen Lebewesens (= Objekt) in Fig.2 angedeutet ist.

Ein schnelles Hochziehen der griffartigen Bedienkappe (8 in Fig.21) aus ihrer Ausgangsstellung, d.h. eine schnelle Bewegung in positiver Z-Richtung, führt dazu, daß das Objekt mit passender Bewegung der Arme und Beine hochspringt, wie es in den piktogrammartigen Darstellungen eines menschlichen Lebewesens in Fig.3 und Fig.4 angedeutet ist.

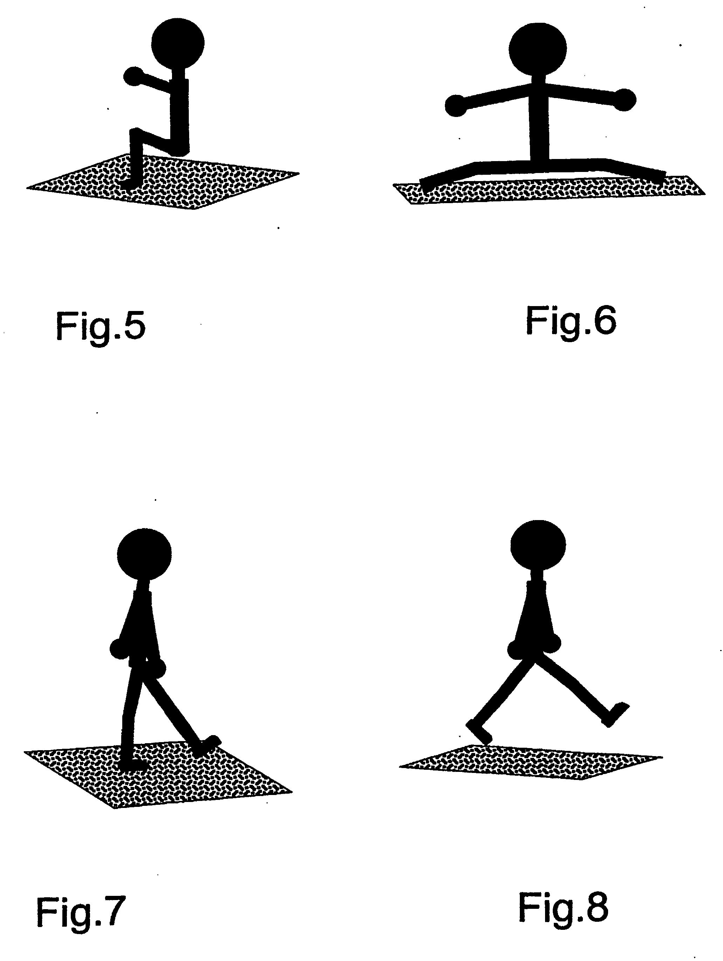

Ein langsames Hinabdrücken der griffartigen Bedienkappe (8 in Fig.21) aus ihrer Ausgangsstellung, d.h. eine langsame Bewegung in negativer Z-Richtung, führt dazu, daß das Objekt mit passender Bewegung der Körperteile in die Knie geht, wie es in der piktogrammartigen Darstellung eines menschlichen Lebewesens in Fig.5 angedeutet ist.

Ein schnelles Hinabdrücken der griffartigen Bedienkappe (8 in Fig.21) aus ihrer Ausgangsstellung, d.h. eine schnelle Bewegung in negativer Z-Richtung, führt dazu, daß das Objekt mit passender Bewegung der Körperteile in eine Grätschstellung geht, wie es in der piktogrammartigen Darstellung eines menschlichen Lebewesens in Fig.6 angedeutet ist.

Eine langsame Schiebebewegung der griffartigen Bedienkappe (8 in Fig.21) aus ihrer Ausgangsstellung nach vorne, d.h. eine langsame Bewegung in positiver Y-Richtung, führt dazu, daß das Objekt mit passender Bewegung der Körperteile nach vorne geht, wie es in der piktogrammartigen Darstellung eines menschlichen Lebewesens in Fig.7 angedeutet ist.

Eine schnelle Schiebebewegung der griffartigen Bedienkappe (8 in Fig.21) aus ihrer Ausgangsstellung nach vorne, d.h. eine schnelle Bewegung in positiver Y-Richtung, führt dazu, daß das Objekt mit passender Bewegung der Körperteile nach vorne rennt, wie es in der piktogrammartigen Darstellung eines menschlichen Lebewesens in Fig.8 angedeutet ist.

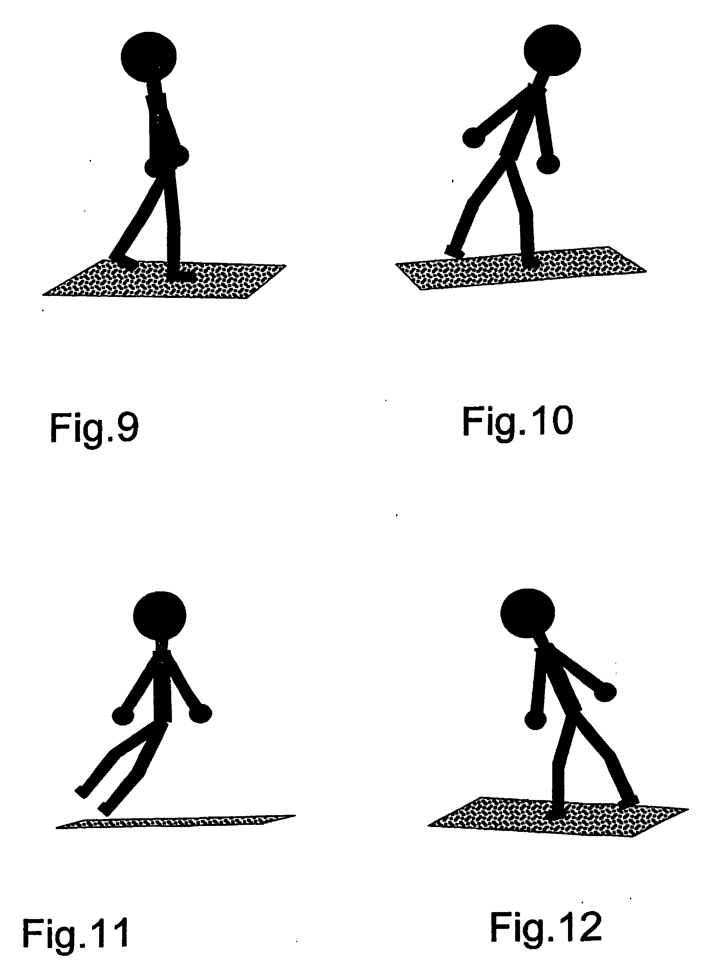

Eine langsame Schiebebewegung der griffartigen Bedienkappe (8 in Fig.21) aus ihrer Ausgangsstellung nach hinten, d.h. eine langsame Bewegung in negativer Y-Richtung, führt dazu, daß das Objekt mit passender Bewegung der Körperteile rückwärts läuft, wie es in der piktogrammartigen Darstellung eines menschlichen Lebewesens in Fig.9 angedeutet ist.

Eine schnelle Schiebebewegung der griffartigen Bedienkappe (8 in Fig.21) aus ihrer Ausgangsstellung nach hinten, d.h. eine schnelle Bewegung in negativer Y-Richtung, führt dazu, daß das Objekt mit passender Bewegung der Körperteile rückwärts rennt. Die diesbezügliche, nicht eigens gezeigte piktogrammartige Darstellung ähnelt derjenigen in Fig.9, wobei aber der Bewegungsablauf schneller wäre.

Eine langsame Schiebebewegung der griffartigen Bedienkappe (8 in Fig.21) aus ihrer Ausgangsstellung zur rechten Seite hin, d.h. eine langsame Bewegung in positiver X-Richtung, führt dazu, daß das Objekt mit passender Bewegung der Körperteile einen Seitschritt nach rechts macht, wie es in der piktogrammartigen Darstellung eines menschlichen Lebewesens in Fig.10 angedeutet ist.

Eine schnelle Schiebebewegung der griffartigen Bedienkappe (8 in Fig.21) aus ihrer Ausgangsstellung zur rechten Seite hin, d.h. eine schnelle Bewegung in positiver X-Richtung, führt dazu, daß das Objekt mit passender Bewegung der Körperteile zur rechten Seite hin wegspringt, wie es in der piktogrammartigen Darstellung eines menschlichen Lebewesens in Fig.11 angedeutet ist.

Eine langsame Schiebebewegung der griffartigen Bedienkappe (8 in Fig.21) aus ihrer Ausgangsstellung zur linken Seite hin, d.h. eine langsame Bewegung in negativer X-Richtung, führt dazu, daß das Objekt mit passender Bewegung der Körperteile einen Seitschritt nach links macht, wie es in der piktogrammartigen Darstellung eines menschlichen Lebewesens in Fig.12 angedeutet ist.

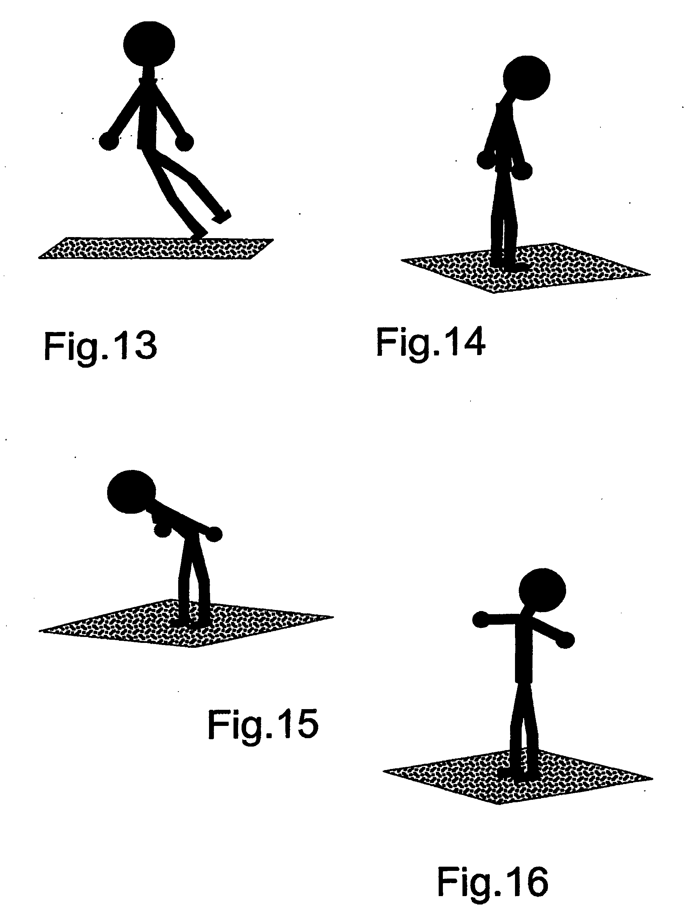

Eine schnelle Schiebebewegung der griffartigen Bedienkappe (8 in Fig.21) aus ihrer Ausgangsstellung zur linken Seite hin, d.h. eine schnelle Bewegung in negativer X-Richtung, führt dazu, daß das Objekt mit passender Bewegung der Körperteile zur linken Seite hin wegspringt, wie es in der piktogrammartigen Darstellung eines menschlichen Lebewesens in Fig.13 angedeutet ist.

Eine langsame Drehbewegung quer zur Laufrichtung, d.h. eine langsame positive Drehung um die X-Richtung, führt dazu, daß das Objekt eine nickende Kopfbewegung nach vorne ausführt, wie es in der piktogrammartigen Darstellung eines menschlichen Lebewesens in Fig.14 angedeutet ist.

Eine schnelle Drehbewegung quer zur Laufrichtung, d.h. eine schnelle positive Drehung um die X-Richtung, führt dazu, daß das Objekt eine Rumpfbeugung ausführt, wie es in der piktogrammartigen Darstellung eines menschlichen Lebewesens in Fig.15 angedeutet ist.

Eine langsame Drehbewegung quer zur Laufrichtung, d.h. eine langsame negative Drehung um die X-Richtung, führt dazu, daß das Objekt eine nickende Kopfbewegung nach hinten ausführt, wie es in der piktogrammartigen Darstellung eines menschlichen Lebewesens in Fig.16 angedeutet ist.

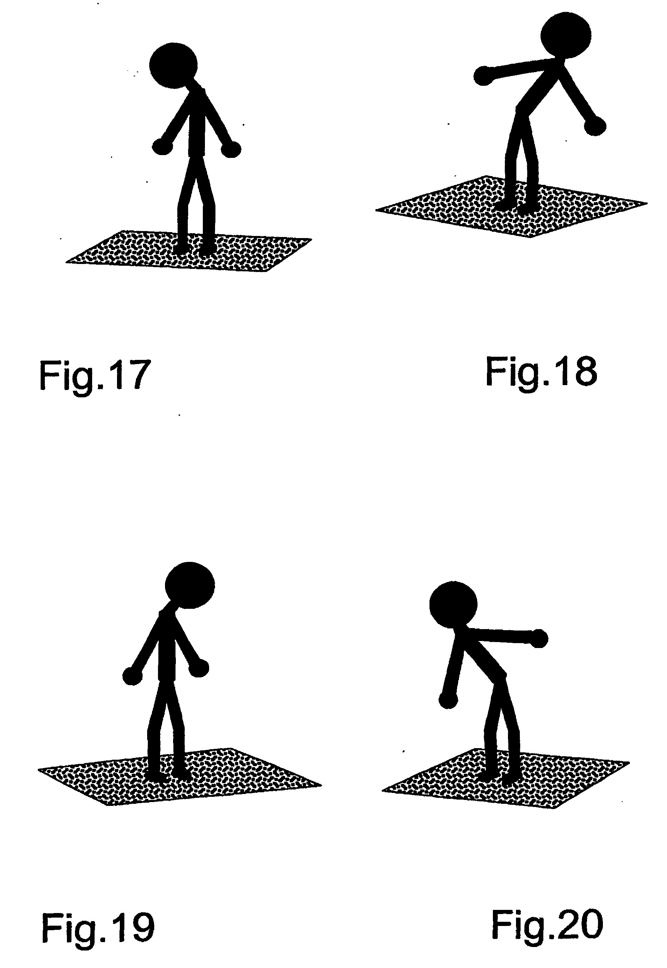

Eine langsame Drehbewegung um die Laufrichtung, d.h. eine langsame positive Drehung um die Y-Richtung, führt dazu, daß das Objekt eine nickende Objekt-Kopfbewegung nach rechts ausführt, wie es in der piktogrammartigen Darstellung eines menschlichen Lebewesens in Fig.17 angedeutet ist.

Eine schnelle Drehbewegung um die Laufrichtung, d.h. eine schnelle positive Drehung um die Y-Richtung, führt dazu, daß das Objekt eine Seitenbeugung des Objektrumpfes nach rechts ausführt, wie es in der piktogrammartigen Darstellung eines menschlichen Lebewesens in Fig.18 angedeutet ist.

Eine langsame Drehbewegung um die Laufrichtung, d.h. eine langsame negative Drehung um die Y-Richtung, führt dazu, daß das Objekt eine nickende Objekt-Kopfbewegung nach links ausführt, wie es in der piktogrammartigen Darstellung eines menschlichen Lebewesens in Fig.19 angedeutet ist.

Eine schnelle Drehbewegung um die Laufrichtung, d.h. eine schnelle negative Drehung um die Y-Richtung, führt dazu, daß das Objekt eine Seitenbeugung des Objektrumpfes nach links ausführt, wie es in der piktogrammartigen Darstellung eines menschlichen Lebewesens in Fig.20 angedeutet ist.

Eine langsame Drehbewegung um die Objekt-Körper-Achse, d.h. eine langsame positive Drehung um die Z-Richtung, führt dazu, daß das Objekt eine Drehung rechts herum vollführt. Eine schnelle Drehbewegung um die Objekt-Körper-Achse, d.h. eine schnelle positive Drehung um die Z-Richtung, führt dazu, daß das Objekt einen Drehsprung rechts herum vollführt. Eine langsame Drehbewegung um die Objekt-Körper-Achse, d.h. eine langsame negative Drehung um die Z-Richtung, führt dazu, daß das Objekt eine Drehung links herum ausführt.

Eine schnelle Drehbewegung um die Objekt-Körper-Achse, d.h. eine schnelle negative Drehung um die Z-Richtung, führt dazu, daß das Objekt einen Drehsprung links herum ausführt. Zu den letztgenannten Bewegungsvorgängen sind keine eigenen charakteristischen piktogrammartigen Darstellungen eines menschlichen Lebewesens beigefügt.

In Fig.21 ist ein Eingabegerät 1 mit Kraft-Momenten-Sensor in Form einer in Fig.22 schematisch dargestellten opto-elektronischen Anordnung aufweist. In Fig.21 weist das abgebildete Eingabegerät 1 eine in der dargestellten Ausführungsform kreiszylinderförmige Bedienkappe 8 mit einer leicht gewölbten Bedienoberfläche 9 auf, die in Fig.21 teilweise aufgeschnitten ist, so daß ein Teil des schematisch dargestellten Aufbaus eines schematisch angedeuteten Kraft-Momenten-Sensors in Form der opto-elektronischen Anordnung zu erkennen ist.

In der in Fig.22 schematisch wiedergegebenen opto-elektronischen Anordnung sind sechs lichtemittierende Einrichtungen 2-1 bis 2-6, vorzugsweise in Form von sechs lichtemittierenden Dioden, in einer Ebene angeordnet. Den lichtemittierenden Einrichtungen 2-1 bis 2-6 ist in einem festen Abstand jeweils eine Schlitzblende 3-1 bis 3-6 zugeordnet. Hierbei sind benachbarte Schlitzblenden in einem zylindrischen Ring 3 hinsichtlich ihrer Hauptausdehnungsrichtung jeweils um 90° gegeneinander versetzt ausgebildet, so daß beispielsweise die Schlitzblende 3-1 horizontal und die beiden benachbarten Schlitzblenden 3-2 und 3-6 vertikal ausgerichtet sind.

In der opto-elektronischen Anordnung von Fig.22 sind sechs positionsempfindliche photosensitive Detektoren 4-1 bis 4-6 in einem zylindrischen Ring 5 bezüglich der ihnen zugeordneten Schlitzblenden 3-1 bis 3-6 entsprechend ausgerichtet angeordnet. Ferner ist der Ring 5 mit den sechs positionsempfindlichen Detektoren 4-1 bis 4-6 fest an der Innenseite der zylinderförmigen Bedienkappe 8 des Eingabegerätes 1 angebracht.

Da die sechs lichtemittierenden Einrichtungen 2-1 bis 2-6 in Fig.22 in einer schematisch als Zylinder angedeuteten Halterungseinrichtung 6 untergebracht sind, welche ihrerseits im Eingabegerät 1 stationär angeordnet ist, ist über die Bedienkappe 8 der mit dieser fest verbundene Ring 5 mit den daran angebrachten sechs positionsempfindlichen Detektoren 4-1 bis 4-6 gegenüber der stationären Anordnung aus den sechs lichtemittierenden Einrichtungen 2-1 bis 2-6 und dem ihr fest zugeordneten Schlitzblendenring 3 bewegbar.

Die stationäre, in Fig.22 schematisch als Zylinder angedeutete Halterungseinrichtung 6 kann bei einer praktischen Ausführungsform beispielsweise auch als eine stationäre Scheibe ausgeführt sein, deren Durchmesser etwa dem Außendurchmesser des die positionsempfindlichen Detektoren 4-1 bis 4-6 tragenden Ringes 5 entspricht und welche über oder unter dem Ring 5 angeordnet sein kann.

Zwischen dem die positionsempfindlichen Detektoren 4-1 bis 4-6 tragenden Ring 5 und einer solchen scheibenförmigen Halterungseinrichtung sind Federelemente 7 (siehe Fig.21) in Form von Schraubenfedern vorgesehen, welche mittels nicht näher dargestellten Schraubbolzen sowohl dem Ring 5 als auch der Halterungseinrichtung 6 fest zugeordnet sind.

Durch die Schraubenfedern 7 wird erreicht, daß der die Detektoren 4-1 bis 4-6 tragende Ring 5 über die Bedienkappe 8 bezüglich der stationären Anordnung der lichtemittierenden Dioden 2-1 bis 2-6 und dem diesen fest zugeordneten Schlitzblendenring 3 in Richtung der drei Achsen X, Y, Z eines rechtwinkligen räumlichen Koordinatensystems (siehe Fig.1) und um diese drei Achsen bewegbar ist und nach jeder Linearverschiebung oder Drehauslenkung jeweils wieder in seine Ausgangslage zurückkehrt.

Die sechs lichtemittierenden Dioden 2-1 bis 2-6 sind in gleichen Winkelabständen voneinander, d.h. unter einem Winkel von 60°, in einer Ebene angeordnet und weisen die abwechselnd zu dieser Ebene horizontal und vertikal ausgerichteten Schlitzblenden 3-1 bis 3-6 auf. Wie aus der Lage der einzelnen Schlitzblenden 3-1 bis 3-6 und der durch Schraffur hervorgehobenen und von den einzelnen Dioden 2-1 bis 2-6 ausgehenden Ebenen zu ersehen ist, sind die Achsen der einzelnen positionsempfindlichen Detektoren 4-1 bis 4-6 immer senkrecht zu den ihnen zugeordneten Schlitzblenden 3-1 bis 3-6 ausgerichtet.

Mit der opto-elektronischen Anordnung ist eine vollständige Erfassung aller sechs möglichen Bewegungskomponenten, nämlich der drei translatorischen Bewegungen in Richtung der drei Achsen X, Y und Z (siehe Fig.1) eines rechtwinkligen räumlichen Koordinatensystems und der drei rotatorischen Bewegungen A, B und C um diese drei Achsen X, Y und Z erreicht.

Da die Bedienkappe 8 fest an dem die Detektoren 4-1 bis 4-6 tragenden Ring 5 angebracht ist und dieser Ring 5 mittels der Federelemente 7 (Fig.21) federnd mit der stationären Halterungseinrichtung 6 verbunden ist, welche die sechs Dioden 2-1 bis 2-6 und die diesen zugeordneten Schlitzblenden 3-1 bis 3-6 trägt, halten die Federelemente 7 das gesamte Meßsystem in der mechanischen Nullstellung, wenn keine Kommandos von der bedienenden Person auf die Bedienkappe 8 aufgebracht werden.

Hierbei läßt sich durch Variation der Federeigenschaften (insbesondere deren Steifigkeit) die Betriebscharakteristik der Bedienkappe 8 in weiten Grenzen beeinflussen. Bei Verwendung von verhältnismäßig weichen Federelementen 7 wirkt das Eingabegerät 1 eher als ein wegempfindlicher Sensor, während bei Verwenden von härteren Federelementen 7 Kommandos mehr durch Ausüben von Kräften und Momenten erteilt werden.

Ferner ist bei der opto-elektronischen Anordnung jedem positionsempfindlichen Detektor je eine eigene Lichtquelle zugeordnet, welche durch eine einfache Regelelektronik angesteuert wird. Mit Hilfe dieser Regelelektronik werden dann beispielsweise unterschiedliche Detektor-Empfindlichkeiten, unterschiedliche Leuchtdioden-Wirkungsgrade, Toleranzen in den elektronischen Bauelementen sowie Temperaturdriften automatisch und schnell ausgeregelt. Auf diese Weise ist auch kein zusätzlicher Abgleich erforderlich.

## Patentansprüche

1. Durch Handbewegungen betätigbares Eingabegerät zum Kommandieren von maschinen- und/oder rechnergestützten Steuerungsoperationen für kinematische Bewegungen eines realen oder virtuellen mehrteiligen Objekts mit Kraft-Momenten-Sensor, mit dem Linearverschiebungen in Form translatorischer Bewegungen in Richtung der drei aufeinander senkrecht stehenden Achsen (X, Y, Z) eines räumlichen, rechtwinkligen Koordinatensystems und/oder Drehauslenkungen in Form rotatorischer Bewegungen (A, B, C) um diese drei Achsen erfaßt und in kommandierte Bewegungen des zu steuernden Objekts umgesetzt werden, **dadurch gekennzeichnet, daß** die kommandierten einzelnen Linearverschiebungen und/oder Drehauslenkungen des Kraft-Momenten-Sensors in transformierender Weise bestimmten kinematischen Bewegungsmustern von Teilen des infolgedessen gezielt manipulierbaren bzw. animierbaren realen oder virtuellen Objekts als Verkopplung zugeordnet sind und daß die kommandierten Geschwindigkeiten der betreffenden Linearverschiebungen und/oder Drehauslenkungen des Kraft-Momenten-Sensors zusätzlich als kinematische Verkopplungszuordnung wertbar sind.

2. Eingabegerät nach Anspruch 1, **dadurch gekennzeichnet, daß** die Bewegungshauptrichtungen, die bei sechs vorhandenen Freiheitsgraden zwölf betragen und damit insgesamt 12 kinematische Verkopplungszuordnungen der Teile des Objekts ergeben, mit Geschwindigkeits- und/oder Positionsstufen zusätzlich untergliedert sind, so daß bei insgesamt z.B. zwei Geschwindigkeits- und/oder Positionsstufen 24 kinematische Verkopplungszuordnungen der Teile des Objekts und z.B. bei insgesamt drei Geschwindigkeits- und/oder Positionsstufen 36 kinematische Verkopplungszuordnungen der Teile des Objekts möglich sind.

3. Eingabegerät nach Anspruch 1 oder 2, **dadurch gekennzeichnet, daß** zusätzlich zur Bewegungssteuerung von Objektteilen den kommandierten einzelnen Linearverschiebungen und/oder Drehauslenkungen des Kraft-Momenten-Sensors Töne und/oder Musik zugeordnet sind, die in jeglicher Art kombinierbar und/oder variierbar sind.

4. Eingabegerät nach Anspruch 3, **dadurch gekennzeichnet, daß** höheren Geschwindigkeiten der Linearverschiebungen und/oder Drehauslenkungen des Kraft-Momenten-Sensors erklingende und/oder sich verändernde Töne, z.B. Schrittgeräusche, oder Musiksequenzen zugeordnet sind.

5. Eingabegerät nach einem der vorhergehenden Ansprüche, **dadurch gekennzeichnet, daß** als Kraft-Momenten-Sensor eine opto-elektronische Anordnung zum gleichzeitigen Eingeben von sechs Komponenten (X, Y, Z; A, B, C) in bzw. um die drei Achsen (X, Y, Z) eines rechtwinkligen räumlichen Koordinatensystems vorgesehen ist, wobei jede von mindestens sechs in gleichen Winkelabständen voneinander in einer Ebene angebrachten lichtemittierenden Einrichtungen (2-1 bis 2-6) mit jeweils vorgeschalteter, fest angeordneter Schlitzblende (3-1 bis 3-6) gegenüber je einem mit seiner Detektorachse senkrecht zur Schlitzrichtung der jeweils zugeordneten Schlitzblende (3-1 bis 3-6) ausgerichteten, positionsempfindlichen Detektor (4-1 bis 4-6) so vorgesehen ist, daß die lichtemittierenden Einrichtungen (2-1 bis 2-6) mit zugeordneten Schlitzblenden (3-1 bis 3-6) und die positionsempfindlichen Detektoren (4-1 bis 4-6) relativ gegeneinander bewegbar sind.

6. Eingabegerät nach Anspruch 5, **dadurch gekennzeichnet, daß** sechs lichtemittierende Einrichtungen (2-1 bis 2-6) mit jeweils in einem festen Abstand vorgelagerter Schlitzblende (3-1 bis 3-6) stationär vorgesehen sind, daß benachbarte Schlitzblenden hinsichtlich ihrer Hauptausdehnungsrichtung jeweils um 90° versetzt ausgebildet sind und daß sechs gemeinsam in bezug auf die Schlitzblenden (3-1 bis 3-6) bewegliche, positionsempfindliche Detektoren (4-1 bis 4-6) vorgesehen sind, deren jeweilige Detektorachse senkrecht zur Schlitzrichtung der jeweils zugeordneten Schlitzblende (3-1 bis 3-6) ausgerichtet ist.

7. Eingabegerät nach Anspruch 5 oder 6, **dadurch gekennzeichnet, daß** die jedem positionsempfindlichen Detektor (4-1 bis 4-6) einzeln zugeordnete lichtemittierende Einrichtung (2-1 bis 2-6) jeweils mit einer Regelelektronik angesteuert wird, welche die Summe der beiden in dem zugehörigen positionsempfindlichen Detektor (4-1 bis 4-6) fließenden Ströme konstant auf einem für alle der mindestens sechs Systeme gleichen Wert hält und dazu die Strahlungsintensität der lichtemittierenden Einrichtungen (2-1 bis 2-6) regelt.

8. Eingabegerät nach einem der Ansprüche 5 bis 7, **dadurch gekennzeichnet, daß** die positionsempfindlichen Detektoren (4-1 bis 4-6) auf der Innenseite eines zylindrischen Ringes (5) entsprechend ausgerichtet angeordnet sind, der an der Innenseite einer als Griff gestaltbaren Bedienkappe (8) fest angebracht ist und der über zwischen dem Ring (5) und einer in der Mitte die lichtemittierenden Einrichtungen (2-1 bis 2-6) tragenden Halterungseinrichtung (6) vorgesehene Federelemente (7) bezüglich der stationären Anordnung aus den mindestens sechs lichtemittierenden Einrichtungen (2-1 bis 2-6) und den diesen jeweils zugeordneten mindestens sechs Schlitzblenden (3-1 bis 3-6) so bewegbar ist, daß er (5) immer wieder in seine Ausgangslage zurückkehrt.

9. Eingabegerät nach einem der Ansprüche 5 bis 8, **dadurch gekennzeichnet, daß** die mindestens sechs lichtemittierenden Einrichtungen (2-1 bis 2-6) in einer Halteeinrichtung (6) untergebracht sind, mit der ein zylindrischer Ring (3) fest verbunden ist, in welchem in den gleichen Winkelabständen wie die an der Halterungseinrichtung (6) angebrachten lichtemittierenden Einrichtungen (2-1 bis 2-6) und diesen in radialer Richtung gegenüberliegend abwechselnd die hinsichtlich ihrer Hauptausdehnungsrichtung jeweils um 90° gegeneinander versetzten Schlitzblenden (3-1 bis 3-6) vorgesehen sind.

10. Verwendung des Eingabegeräts nach einem der vorhergehenden Ansprüche bei maschinen- oder rechnergesteuerten Objekten, die in sich beweglichen und/oder auch insgesamt beweglichen Gegenständen oder Lebewesen nachgebildet sind, wobei Teile des jeweils nachgebildeten Gegenstandes oder Lebewesens, z.B. die Arme, die Beine, der Rumpf und der Kopf eines Lebewesens, die hinsichtlich ihrer Kinematik zu steuernden Teile des Objekts bilden.

11. Verwendung nach Anspruch 10 für rechnergesteuerte Animationsoperationen der Objekte.

## Claims

1. A manually actuated input device for commanding machine- and/or computer-assisted control operations for kinematic motions of a real or virtual multipart object, including a force/moment sensor with which linear displacements in the form of translational movements in the direction of three axes (X, Y, Z), each standing perpendicular on the other, of a three-dimensional rectangular system of coordinates and/or rotational excursions in the form of rotational motions (A, B, C) about these three axes are sensed and converted into commanded motions of the object to be controlled **characterized in that**, that the commanded individual linear displacements and/or rotational excursions of the force/moment sensor are assigned specific kinematic motion patterns of parts of the real or virtual object thereby permitting manipulation or animation thereof as a transforming interlink and **in that** the commanded velocities of the corresponding individual linear displacements and/or rotational excursions of the force/moment sensor are additionally weightable as a kinematic interlink assignment.

2. The input device as set forth in claim 1 **characterized in that,** that for six degrees of freedom there are twelve major directions of motion and thus a total of twelve kinematic interlinking assignments of the parts of the object which are additionally sub-related by rates and/or positions so that for e.g. a total of two rates and/or positions 24 kinematic interlinking assignments of the parts of the object are possible, and, e.g. for a total of three rates and/or positions 36 kinematic interlinking assignments of the parts of the object are possible

3. The input device as set forth in claim 1 or 2 **characterized in that**, that in addition to controlling the motions of parts of said object, tones and/or music of any kind are assigned to the commanded individual linear displacements and/or rotational excursions of the force/moment sensor in any kind of combination and/or variation.

4. The input device as set forth in claim 3 **characterized in that,** that higher velocities of linear displacements and/or rotational excursions of the force/moment sensor are assigned sounding and/or changing tones such as e.g. walking noises or music sequences.

5. The input device as set forth in any of the preceding claims **characterized in that,** that an optoelectronic assembly for simultaneously entering six components (X, Y, Z; A, B, C) in or about said three axes (X, Y, Z) of a rectangular three-dimensional system of coordinates is provided as said force/moment sensor, in which each of at least six light-emitting means (2-1 to 2-6) mounted equally angularly spaced from the other, each including an inputting, fixedly arranged slotted aperture (3-1 to 3-6), is arranged relative to each position-sensing detectors (4-1 to 4-6) oriented by its detector axis perpendicular to said slot directly of each assigned slotted apertures (3-1 to 3-6) so that said light-emitting means (2-1 to 2-6) including said assigned slotted apertures (3-1 to 3-6) and said position-sensing detectors (4-1 to 4-6) are moveable relative to each other.

6. The input device as set forth in claim 5 **characterized in that**, that six light-emitting means (2-1 to 2-6) each including a slotted aperture (3-1 to 3-6) at a fixed input spacing are provided stationary, each adjacent slotted aperture is configured offset 90° to the other relative to their major direction of extension and six position-sensing detectors (4-1 to 4-6) movable mutually relative to said slotted apertures (3-1 to 3-6) are provided, the detector axis of each of which is oriented perpendicular to the slot direction of each assigned slotted aperture (3-1 to 3-6).

7. The input device as set forth in claim 5 or 6 **characterized in that**, that each light-emitting means (2-1 to 2-6) assigned to each position-sensing detector (4-1 to 4-6) is signalled by an electronic closed loop controller which maintains the sum of the two currents flowing in the corresponding position-sensing detector (4-1 to 4-6) constant to a value which is the same for all of said at least six systems in controlling the beam intensity of said light-emitting means (2-1 to 2-6).

8. The input device as set forth in claim 5 to 7 **characterized in that**, that said position-sensing detectors (4-1 to 4-6) are arranged correspondingly oriented on the inner side of a cylindrical ring (5) fixedly secured to the inner side of a control cap 8 configurable as a handle and which is moveable via spring elements (7) provided between said ring (5) and a supporting means (6) mounting in the middle said light-emitting means (2-1 to 2-6) relative to the stationary input device of said at least six light-emitting means (2-1 to 2-6) and said at least six slotted apertures (3-1 to 3-6), each assigned thereto, so that said ring (5) is always returned to its starting position.

9. The input device as set forth in claim 5 to 8 **characterized in that**, that said at least six light-emitting means (2-1 to 2-6) are accommodated in a supporting means (6) to which a cylindrical ring (3) is fixedly secured in which slotted apertures (3-1 to 3-6) are provided in the same angular spacing as that of said light-emitting means (2-1 to 2-6) mounted by said supporting means (6) and opposite to the latter are alternating each offset 90° to the other relative to their major direction of extension.

10. Use of the input device as set forth in any of the preceding claims for machine- or computer-controlled objects simulating objects or animate beings moving inherently and/or totally, whereby parts of the object or animate being, e.g. the arms, legs, trunk and head of an animate being, simulated in each case, form the parts of the object to be controlled as regards their kinematics.

11. Use as set forth in claim 10 for computer-controlled animation operations of the objects.

## Revendications

1. Dispositif d'entrée qui peut être manoeuvré par des mouvements de la main et qui est destiné à commander des opérations de pilotage assistées par machine ou par ordinateur pour des mouvements cinématiques d'un objet réel ou virtuel à plusieurs parties avec un capteur de moments de forces avec lequel sont enregistrés des déplacements linéaires sous forme de mouvements de translation en direction des trois axes (X, Y, Z) - placés perpendiculairement l'un par rapport à l'autre - d'un système orthogonal de coordonnées spatial et/ou des déviations rotatives sous forme de mouvements de rotation (A, B, C) autour de ces trois axes, et sont convertis en mouvements de commandes pour piloter l'objet mis en oeuvre, **caractérisé en ce que** les déplacements linéaires et/ou les déviations rotatives particuliers de commandes du capteur de moments de forces sont associés de façon à les transformer en couplage de mouvements cinématiques à types définis par des parties de l'objet réel ou virtuel qu'on peut de ce fait manipuler ou animer de façon ciblée et que les vitesses des déplacements linéaires et/ou des déviations rotatives de commandes du capteur de moments de forces peuvent en outre être évaluées en tant qu'ordres de couplage cinématique.

2. Dispositif d'entrée selon la revendication 1 **caractérisé en ce que** les directions principales de mouvement qui se montent à douze pour six degrés de liberté et donnent donc au total 12 ordres de couplage cinématiques des parties de l'objet sont en outre subdivisées en étapes de vitesse et/ou de position, de sorte qu'on peut obtenir au total 24 ordres de couplage cinématiques des parties de l'objet par exemple pour deux étapes de vitesse et/ou de position et 36 ordres de couplage cinématiques des parties de l'objet par exemple pour au total trois étapes de vitesse et/ou de position.

3. Dispositif d'entrée selon la revendication 1 ou 2 **caractérisé en ce que**, outre la commande du mouvement de parties d'objet, des sons et/ou de la musique qu'on peut combiner ou modifier de toutes les façons possibles sont associés aux déplacements linéaires et/ou aux déviations rotatives particuliers commandés du capteur de moments de forces.

4. Dispositif d'entrée selon la revendication 3 **caractérisé en ce que** des sons qui retentissent et/ou qui se modifient, par exemple des bruits de pas ou des séquences musicales, sont associés à des vitesses assez élevées des déplacements linéaires et/ou des déviations rotatives du capteur de moments de forces.

5. Dispositif d'entrée selon l'une des revendications précédentes **caractérisé en ce qu'**en tant que capteur de moments de forces on prévoit un arrangement optoélectronique pour entrer simultanément six composantes (X, Y, Z ; A, B, C) dans ou autour des trois axes (X, Y, Z) d'un système orthogonal de coordonnées spatial, chacune des installations (2-1 à 2-6) luminescentes au moins au nombre de six qui sont disposées dans un plan selon des écarts angulaires égaux et qui comportent à chaque fois une fente d'éclairage (3-1 à 3-6) placée fixement et montée en amont étant prévue à chaque fois en face d'un détecteur (4-1 à 4-6) sensible à la position et disposé avec son axe de détection perpendiculairement à la direction de la fente d'éclairage (3-1 à 3-6) respectivement associée de telle manière que les installations (2-1 à 2-6) luminescentes avec les fentes d'éclairage (3-1 à 3-6) associées et les détecteurs (4-1 à 4-6) sensibles à la position peuvent être déplacés les uns par rapport aux autres.

6. Dispositif d'entrée selon la revendication 5 **caractérisé en ce que** six installations (2-1 à 2-6) luminescentes avec chacune une fente d'éclairage (3-1 à 3-6) placée devant selon un écart fixe sont prévues de façon stationnaire, que des fentes d'éclairage voisines sont réalisées en étant décalées à chaque fois de 90° pour ce qui est de leur direction d'extension principale et que l'on prévoit six détecteurs (4-1 à 4-6), sensibles à la position, mobiles par rapport aux fentes d'éclairage (3-1 à 3-6) et dont l'axe de détection respectif est dirigé perpendiculairement à la direction de fente de la fente d'éclairage (3-1 à 3-6) à chaque fois associée.

7. Dispositif d'entrée selon la revendication 5 ou 6 **caractérisé en ce que** l'installation (2-1 à 2-6) luminescente associée individuellement à chaque détecteur (4-1 à 4-6) sensible à la position est à chaque fois commandée par un système électronique de réglage qui maintient constante la somme des deux courants qui circulent dans le détecteur (4-1 à 4-6) correspondant sensible à la position, à une valeur égale pour tous les systèmes au moins au nombre de six et qui ainsi règle l'intensité du rayonnement des installations (2-1 à 2-6) luminescentes.

8. Dispositif d'entrée selon l'une des revendications 5 à 7 **caractérisé en ce que** les détecteurs (4-1 à 4-6) sensibles à la position sont disposés en étant orientés de façon correspondante sur le côté intérieur d'un anneau (5) cylindrique qui est appliqué fixement sur le côté intérieur d'un capuchon de manoeuvre (8) qu'on peut conformer en tant que poignée et qui au moyen d'éléments élastiques (7), prévus entre l'anneau (5) et une installation de maintien (6) qui porte au milieu les installations (2-1 à 2-6) luminescentes, est mobile par rapport à l'arrangement stationnaire composé des installations (2-1 à 2-6) luminescentes au moins au nombre de six et des fentes d'éclairage (3-1 à 3-6) au moins au nombre de six qui leur sont respectivement associées de telle manière qu'il (5) retourne toujours dans sa position initiale.

9. Dispositif d'entrée selon l'une des revendications 5 à 8 **caractérisé en ce que** les installations (2-1 à 2-6) luminescentes au moins au nombre de six sont introduites dans une installation de maintien (6) à laquelle est lié fixement un anneau (3) cylindrique dans lequel, selon les même écarts angulaires que les installations (2-1 à 2-6) luminescentes ménagées sur l'installation de maintien (6), on prévoit des fentes d'éclairage (3-1 à 3-6) faisant face à celles-ci en direction radiale et alternativement décalées de 90° à chaque fois les unes par rapport aux autres pour ce qui est de leur direction d'extension principale.

10. Utilisation du dispositif d'entrée selon l'une des revendications précédentes, construit pour des objets pilotés par machine ou par ordinateur qui sont reproduits dans des objets ou dans des êtres vivants qui sont mobiles en soi et/ou sont globalement mobiles, des parties de l'objet ou de l'être vivant respectivement simulé, par exemple les bras, les jambes, le tronc et la tête d'un être vivant, formant les parties de l'objet à piloter pour ce qui est de leur cinématique.

11. Utilisation selon la revendication 10 pour des opérations d'animation des objets pilotées par ordinateur.
